(19) Europäisches Patentamt
European Patent Office
Office européen des brevets

(11) Veröffentlichungsnummer: **0 213 565**
**B1**

(12) # EUROPÄISCHE PATENTSCHRIFT

(45) Veröffentlichungstag der Patentschrift: **13.06.90**

(51) Int. Cl.[5]: **C08G 63/68**, C08L 101/00
// (C08L101/00, 67:02)

(21) Anmeldenummer: **86111606.9**

(22) Anmeldetag: **22.08.86**

(54) **Schwefelhaltige aliphatische Polyester und ihre Verwendung als Stabilisatoren für Polymere.**

(30) Priorität: **04.09.85 DE 3531497**

(43) Veröffentlichungstag der Anmeldung:
**11.03.87 Patentblatt 87/11**

(45) Bekanntmachung des Hinweises auf die Patenterteilung:
**13.06.90 Patentblatt 90/24**

(84) Benannte Vertragsstaaten:
**DE FR GB IT**

(56) Entgegenhaltungen:
**CH-A- 232 135**
**US-A- 4 013 724**
**US-A- 4 031 023**
**US-A- 4 321 191**

**CHEMICAL ABSTRACTS, Band 80, Nr. 10, 11. März 1974, Seite 50, Zusammenfassung Nr. 49088a, Columbus, Ohio, US; & JP-A-72 42 150 (TEIJIN LTD) 24-10-1972**

(73) Patentinhaber: **BAYER AG, D-5090 Leverkusen 1 Bayerwerk(DE)**

(72) Erfinder: **Hammer, Heinz, Dr., Rybnikerstrasse 12, D-5000 Köln 80(DE)**
Erfinder: **Eichenauer, Herbert, Dr., Goethestrasse 71, D-4047 Dormagen 1(DE)**
Erfinder: **Roos, Ernst, Dr., Am Geusgarten 6, D-5068 Odenthal(DE)**
Erfinder: **Jürgens, Eberhard, Dr., Niehler Strasse 328, D-5000 Köln 60(DE)**

**EP 0 213 565 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft schwefelhaltige aliphatische Polyester, die den Schwefel sowohl in der Säureals auch in der Diolkomponente in Form von Sulfid- oder Disulfidgruppen eingebaut enthalten, ein Verfahren zur Herstellung dieser Polyester sowie mit diesen Polyestern ausgerüstete Polymere.

Synthetische Polymere, insbesondere solche mit ungesättigten Bindungen in der Molekülkette, unterliegen unter der Einwirkung von Sauerstoff, Hitze oder Licht Abbaureaktionen, die zu einer Verschlechterung der Eigenschaften und zu Problemen beim praktischen Einsatz der aus den Polymeren hergestellten Formteile führen.

Zur Verhinderung des Abbaus von Polymeren wurden bereits zahlreiche Stabilisatoren vorgeschlagen, z.B. auch Kombinationen aus sterisch gehinderten Phenolen und schwefelhaltigen Verbindungen.

Auch die Mitverwendung schwefelhaltiger Polyester bei der Stabilisierung von synthetischen Polymeren mit sterisch gehinderten Phenolen ist bekannt (vgl. US-PS 4 321 191 sowie die dort zitierte Literatur).

Es wurde gefunden, daß Polyester mit besonders guter Wirksamkeit als Co-Stabilisatoren bei guter Verträglichkeit mit Polymeren und geringer Flüchtigkeit aus aliphatischen schwefelhaltigen Dicarbonsäuren(estern) der Formel (I)

$$RO-\overset{O}{\overset{\|}{C}}-[(CH_2)_a-(S)_b-(CH_2)_c-(S)_d-(CH_2)_e]_f-\overset{O}{\overset{\|}{C}}-OR^1 \qquad (I)$$

worin
$R, R^1 = H, C_1\text{-}C_4$-Alkyl
a = 1, 2 oder 3
b, d = 0, 1 oder 2, aber nicht beide 0
c = 0, 1, 2 oder 3
e, f = 1, 2 oder 3
und cycloaliphatischen schwefelhaltigen Diolen der Formel (II)

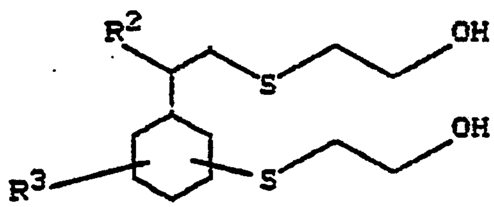

(II)

worin
$R^2, R^3 = H, C_1\text{-}C_4$-Alkyl
erhalten werden.

Gegenstand der Erfindung sind schwefelhaltige aliphatische Polyester, die aus Dicarbonsäure(estern) der Formel I und Diolen der Formel II aufgebaut sind und die ein Molekulargewicht von 500 - 7000 besitzen.

Gegenstand der Erfindung sind insbesondere schwefelhaltige Polyester, die durch Polykondensation aus schwefelhaltigen Dicarbonsäuren oder Dicarbonsäureestern der Formel (I) und schwefelhaltigen Diolen der Formel (II) hergestellt werden, wobei die Molverhältnisse Dicarbonsäure(ester) : Diol 5:1 bis 1:5, bevorzugt 3:1 bis 1:3 und besonders bevorzugt 2:1 bis 1:2 betragen. Dabei bedeuten in den Formeln (I) und (II) R, $R^1$, $R^2$ und $R^3$ unabhängig voneinander Wasserstoff oder einen Alkylrest mit 1 bis 4 Kohlenstoffatomen, a = 1, 2 oder 3, b und d = 0, 1 oder 2, jedoch nicht beide gleichzeitig 0, c = 0, 1, 2 oder 3, und e und f = 1, 2 oder 3.

Bevorzugte Dicarbonsäuren(ester) sind:

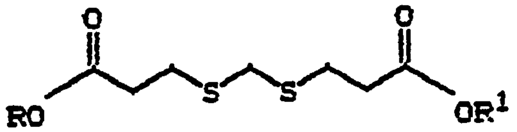,
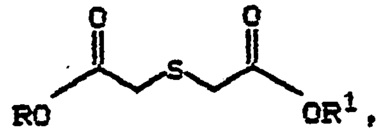,

(III) (IV)

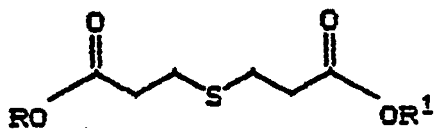,
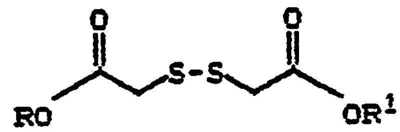

(V) (VI)

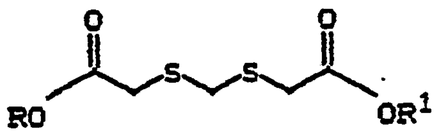
und
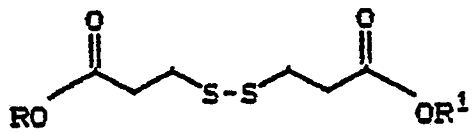

(VII) (VIII)

wobei R und $R^1$ die oben genannte Bedeutung haben.

Bevorzugte Diolkomponenten sind

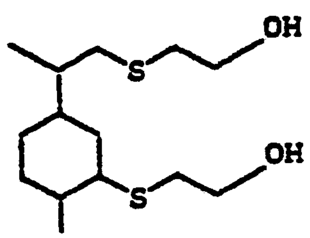
und
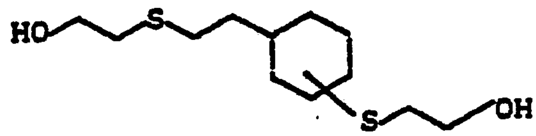

(IX) (X)

Die schwefelhaltigen Polyester können hergestellt werden, indem man Diol und Dicarbonsäure(ester) mischt und polykondensiert, bis das gewünschte Molekulargewicht erreicht ist. Dabei können als Molekulargewichtsregler monofunktionelle Carbonsäuren(ester) oder monofunktionelle Alkohole zugesetzt werden. Die Kondensationstemperaturen betragen 50°C bis 250°C, bevorzugt 60°C bis 200°C und besonders bevorzugt 70°C bis 180°C. Zur Kondensation werden übliche Katalysatoren, z.B. Säuren wie p-Toluolsulfonsäure oder Basen wie Metall-Alkoholate oder metallorganische Verbindungen des Titans, Zinns oder anderer Übergangsmetalle verwendet.

Die resultierenden schwefelhaltigen aliphatischen Polyester besitzen Molekulargewichte (bestimmt über die OH-Zahl oder durch dampfdruckosmometrische Messung) von 500 - 7000, vorzugsweise von 700 - 2500.

Die schwefelhaltigen Polyester eignen sich als Co-Stabilisatoren bei der Stabilisierung von synthetischen Polymeren durch sterisch gehinderte Phenole.

Besondere Wirksamkeit zeigen sie bei der Stabilisierung von Kautschuken, z.B. von Polybutadien, Polyisopren, Polychloropren, Styrol-Butadien-Copolymerisaten, Acrylnitrilbutadien-Copolymerisaten, Acrylatkautschuken, Ethylen-Propylen-Kautschuken oder EPDM-Kautschuken (Ethylen/Propylen/Dien-Kautschuke, die als Dien ein nichtkonjugiertes Dien wie z.B. Hexadien-1,5 oder Norbornadien in kleinen Mengen enthalten), von Thermoplasten, z.B. Polyethylen, Polypropylen, Polystyrol, Polymethylmethacrylat, Styrol/Acrylnitril-Copolymerisaten, Polycarbonat, Polyamid, Polyester und besonders von kautschukmodifizierten Thermoplasten, z.B. Acrylnitril/Butadien/Styrol-Terpolymerisaten (ABS), Methylmethacrylat/Butadien/Styrol-Terpolymerisaten (MBS), schlagzähem Polystyrol (HIPS) oder ABS/Polycarbonat-Gemischen.

Die Polyester können mit allen als Antioxidantien einsetzbaren sterisch gehinderten Phenolen zur Polymerstabilisierung kombiniert werden. Beispiele für geeignete sterisch gehinderte Phenole sind 2,6-Di-tert.-butyl-4-methylphenol, Octadecyl-3-(3',5'-di-tert.-butyl-4'-hydroxyphenyl)-propionat, Pentaerythrit-tetrakis-[3-(3',5'-di-tert.-butyl-4'-hydroxyphenyl)-propionat], 2,2'-Thiodiethylbis-[3-(3',5'-di-tert.-butyl-4'-hydroxyphenyl)-propionat].

Im allgemeinen setzt man 0,01 bis 5 Gew.-Teile, bevorzugt 0,05 bis 3 Gew.-Teile und besonders bevorzugt 0,1 bis 2,5 Gew.-Teile Polyester (jeweils bezogen auf 100 Gew.-Teile zu stabilisierendes Polymer) zu.

Dabei kann der schwefelhaltige aliphatische Polyester in fester Form, als Lösung oder in Form einer Dispersion oder einer Emulsion zu dem Polymermaterial zugegeben werden. Je nach Form des zu stabilisierenden Polymeren arbeitet man auf Knetern, Walzen, in Emulsion oder in Lösung ein.

Beispiele und Vergleichsbeispiele

Teile sind immer Gewichtsteile.

Beispiel 1

Herstellung des Polyesters aus 1-Methyl-2-(hydroxyethylthio)-4-[1-methyl-2-(2-hydroxyethylthio)-ethyl]-cyclohexan (Diol A) und Thiodipropionsäuredimethylester

134 g (0,65 Mol) Thiodipropionsäuredimethylester und 116 g (0,4 Mol) Diol A werden mit 0,2 ml Titantetrabutylat unter $N_2$ 20 h auf 160°C erhitzt. Das gebildete Methanol wird in einer gekühlten Vorlage aufgefangen. Nach dem Abkühlen nimmt man in 500 ml Toluol auf und wäscht zweimal mit Wasser. Das Lösungsmittel wird im Vakuum abdestilliert. Der Rückstand wird im Vakuum bei 0,1 mbar bis zu einer Temperatur von 220°C andestilliert, um die flüchtigen Bestandteile zu entfernen. Es verbleibt ein gelbes Öl. Das mittlere Molekulargewicht beträgt 1130.

Beispiel 2

103 g (0,5 Mol) Thiodipropionsäuredimethylester und 146 g (0,5 Mol) Diol A werden wie im Beispiel 1 umgesetzt. Der erhaltene Polyester hat ein mittleres Molekulargewicht von 2440.

Beispiel 3

112 g (0,5 Mol) 2,2'-[Methylenbis(thio)]bisessigsäuredimethylester und 190 g (0,65 Mol) Diol A werden analog Beispiel 1 zum Polyester mit einem mittleren Molekulargewicht von 1155 umgesetzt.

Beispiel 4

Polyester aus 1-[2-(2-Hydroxyethylthio)-ethyl]-3-bzw. 4-(2-hydroxyethylthio)cyclohexan (Diol B) und Thiodipropionsäuredimethylester

82 g (0,4 Mol) Thiodipropionsäuredimethylester und 80 g (0,3 Mol) Diol B werden, wie im Beispiel 1 angeführt, zum Polyester kondensiert. Mittleres Molekulargewicht: 1790.

Beispiel 5

110 g (0,5 Mol) 2,2'-Dithiobisessigsäuredimethylester und 132 g (0,5 Mol) Diol B werden mit 0,2 ml Titantetrabutylat bei 300 mbar 12 h lang auf 150-155°C erhitzt. Man fügt 500 ml Toluol zu und wäscht zweimal mit Wasser. Das Lösungsmittel wird abgezogen, der Rückstand im Vakuum bei 0,1 mbar bis 220°C Badtemperatur erhitzt, um die flüchtigen Anteile zu entfernen. Das verbleibende gelbliche Öl besitzt ein mittleres Molekulargewicht von 700.

Beispiel 6

112 g (0,5 Mol) 2,2'-[Me thylenbis(thio)]bisessigsäuredimethylester und 132 g (0,5 Mol) Diol B werden analog Beispiel 5 zu einem gelblichen Polyester mit einem mittleren Molekulargewicht von 3862 umgesetzt.

Beispiel 7

Prüfung der Wirksamkeit in Polypropylen

Handelsübliches Polypropylen-Granulat wird 8 h in einer Soxhlet-Apparatur mit Methylenchlorid extrahiert, um den vorhandenen Stabilisator zu entfernen. Anschließend trocknet man 12 h im Vakuum.

In einem Laborkneter werden die zu prüfenden Stabilisatorengemische in der Schmelze bei 200°C 4 Minuten lang eingearbeitet. Das Polypropylen wird anschließend zu 0,5 mm dicken Platten gepreßt (7 Min. bei 200°C und 10 bar vorpressen, 1,5 Min. bei 200°C und 200 bar, 10 Min. unter Druck abkühlen).

Jeweils Triplikate werden bei 150°C im Umluftschrank gelagert. Gemessen wird die Zeit bis zum Einsetzen der oxidativen Zerstörung (Braunfärbung, Versprödung).

Die erfindungsgemäßen Co-Stabilisatoren wurden in jeweils 0,3 Gew.% verwendet. Als phenolisches Antioxidans wurde Pentaerythrit-tetrakis-3-(3',5'-di-tert.-butyl-4'-hydroxyphenyl)-propionat (Irganox 1010, Ciba Geigy) in jeweils 0,1 % mitverwendet. Die Ergebnisse der Alterungsversuche sind in Tabelle 1 aufgeführt.

Tabelle 1

| Co-Stabilisator | phenolisches Antioxidans | Zeit bis zur Zerstörung/Tage |
|---|---|---|
| – | 0,1 Gew.% | 25 |
| 0,3 Gew.% Dilaurylthiodipropinat | 0,1 Gew.% | 32 |
| 0,3 Gew.% Polyester aus Bsp. 2 | 0,1 Gew.% | 37 |
| 0,3 Gew.% Polyester aus Bsp. 3 | 0,1 Gew.% | 38 |
| 0,3 Gew.% Polyester aus Bsp. 5 | 0,1 Gew.% | 38 |
| 0,3 Gew.% Polyester aus Bsp. 6 | 0,1 Gew.% | 31 |

Beispiel 8

Herstellung einer Stabilisatordispersion unter Verwendung des schwefelhaltigen aliphatischen Polyesters aus Beispiel 2

Zu einer Schmelze von 35 Teilen des Polyesters aus Beispiel 2 und 100 Teilen Octadecyl-3-(3',5'-di-tert.-butyl-4'-hydroxyphenyl)-propionat (Irganox 1076, Ciba Geigy) wird unter starkem Rühren (Ultraturrax) eine heiße Lösung von 40 Teilen eines nichtionischen Emulgators (ethoxyliertes Nonylphenol) in 365 Teilen Wasser gegeben und bis zum Vorliegen einer stabilen Dispersion gerührt.

Beispiel 9 (Vergleich)

Herstellung einer Stabilisatorendispersion unter Verwendung eines herkömmlichen schwefelhaltigen Synergisten.

Zu einer Schmelze von 70 Teilen Dilaurylthiodipropionat (Irganox PS 800, Ciba Geigy) und 100 Teilen Octadecyl-3-(3',5'-di-tert.-butyl-4'-hydroxyphenyl)-propionat (Irganox 1076, Ciba Geigy) wird unter starkem Rühren (Ultraturrax) eine heiße Lösung von 40 Teilen eines nichtionischen Emulgators (ethoxyliertes Nonylphenol) in 470 Teilen Wasser gegeben und bis zum Vorliegen einer stabilen Dispersion gerührt.

Beispiel 10

Verwendung eines schwefelhaltigen aliphatischen Polyesters als Co-Stabilisator zur Stabilisierung von ABS

100 Teile eines Pfropfkautschuks der durch Emulsionspolymerisation eines Gemisches aus 36 Gew.-Teilen Styrol und 14 Gew.-Teilen Acrylnitril in Gegenwart von 50 Gew.-Teilen eines in Latexform vorliegenden Polybutadiens mit einem durch Lichtstreuung gemessenen mittleren Teilchendurchmesser von 0,3 µm hergestellt wurde, wurden mit 4 Teilen (bezogen auf Pfropfkautschuk-Feststoff) der Stabilisatordispersion aus Beispiel 8 versetzt. Nach zweistündigem Einrühren wurde der Latex unter Verwendung einer 1%igen wäßrigen Lösung eines Essigsäure/Magnesiumsulfat-1:1-Gemisches koaguliert und im Vakuum bei 70°C getrocknet. Das Pulver mit einer Korngröße von 1 bis 0,1 mm wurde durch dynamische DSC-Messungen unter Verwendung eines DSC-2-Meßgerätes der Firma Perkin-Elmer auf seine Thermostabilität untersucht (Spülgas Sauerstoff 3,6 l/h, Heizrate 20 K/min): Beginn der exothermen Reaktion bei T = 220°C.

Beispiel 11 (Vergleich)

Verwendung von Dilaurylthiodipropionat als Co-Stabilisator zur Stabilisierung von ABS

Der in Beispiel 10 beschriebene Pfropfkautschuklatex wurde mit 4 Teilen (bezogen auf Pfropfkautschuk-Feststoff) der Stabilisatordispersion aus Beispiel 9 versetzt und wie in Beispiel 10 beschrieben in trockenes Pulver überführt. Dynamische DSC-Messungen (Bedingungen wie bei Beispiel 10): Beginn der exothermen Reaktion bei T = 212°C.

## Patentansprüche

1. Schwefelhaltige aliphatische Polyester, die aus Dicarbonsäuren(estern) der Formel (I) und Diolen der Formel (II) aufgebaut sind

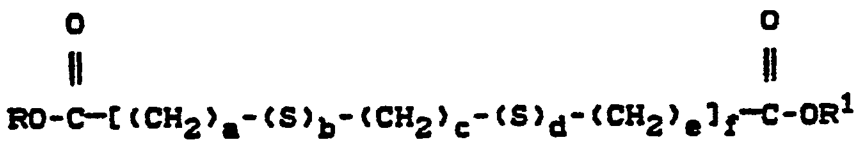

(I)

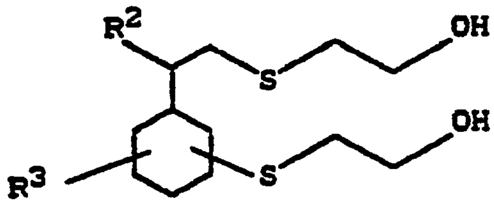

(II)

wobei R, $R^1$, $R^2$ und $R^3$ unabhängig voneinander Wasserstoff oder einen Alkylrest mit 1 bis 4 Kohlenstoffatomen, a = 1, 2 oder 3, b und d = 0, 1 oder 2 oder 3, aber nicht beide 0, und e und f = 1, 2 oder 3 bedeuten und die ein Molekulargewicht von 500 bis 7000 besitzen.

2. Schwefelhaltige aliphatische Polyester nach Anspruch 1, in denen das Diol eine der Verbindungen

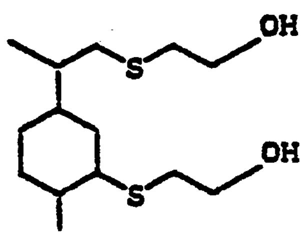

und

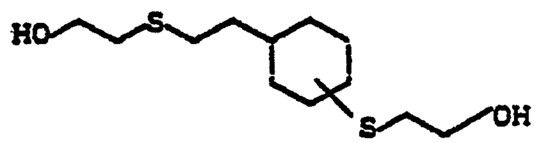

IX X

oder ein Gemisch aus diesen ist.

3. Schwefelhaltige aliphatische Polyester nach Anspruch 1, in denen der Dicarbonsäure(ester) eine der Verbindungen

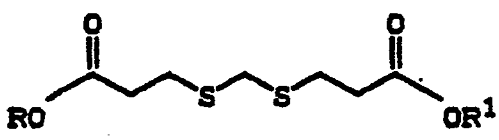

,

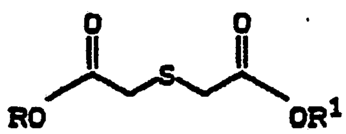

,

(III) (IV)

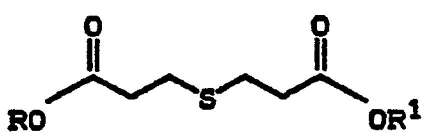

und

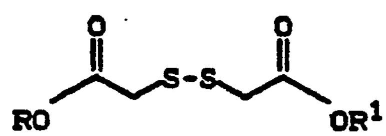

(V) (VI)

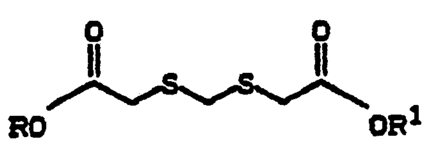

und

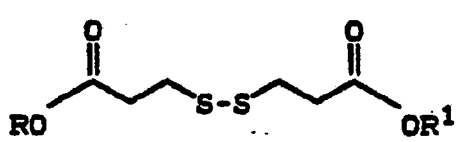

(VII) (VIII)

oder Mischungen daraus ist, wobei R und $R^1$ Wasserstoff oder Alkylgruppen mit 1 bis 4 Kohlenstoffatomen bedeuten.

4. Verfahren zur Herstellung schwefelhaltiger aliphatischer Polyester gemäß Anspruch 1, dadurch gekennzeichnet, daß Dicarbonsäuren(ester) (I) und Diol (II) gemischt und bei 50 - 250°C gegebenenfalls in Anwesenheit eines Katalysators bis zu einem Molekulargewicht von 500 bis 7000 polykondensiert werden.

5. Verfahren nach Anspruch 4, dadurch gekennzeichnet, daß Diole der Formeln

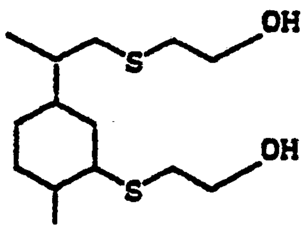

und

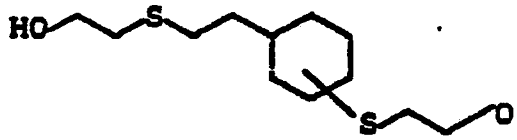

(IX) (X)

oder deren Mischungen und Dicarbonsäure(ester) der Formeln

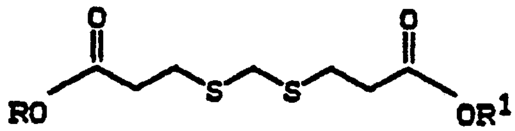

,

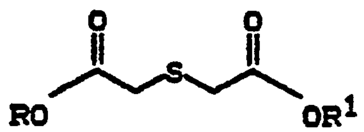

,

(III) (IV)

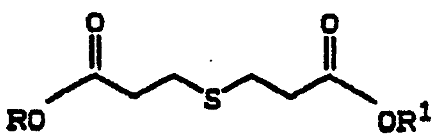

,

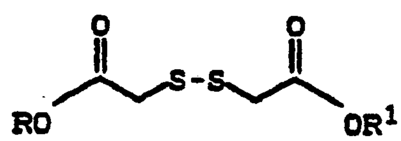

(V) (VI)

worin R und R' Wasserstoff oder $C_1$-$C_4$-Alkyl bedeuten oder Mischungen daraus eingesetzt werden.

6. Synthetische Polymere, insbesondere thermoplastische Formmassen, gekennzeichnet durch einen Gehalt von 0,1 bis 5 Gew.-% eines Polyesters gemäß Anspruch 1.

**Claims**

1. Sulphur-containing aliphatic polyesters which are composed of dicarboxylic acid (esters) of the formula (I) and diols of the formula (II)

$$RO-\overset{\overset{O}{\|}}{C}-[(CH_2)_a-(S)_b-(CH_2)_c-(S)_d-(CH_2)_e]_f-\overset{\overset{O}{\|}}{C}-OR^1 \quad (I)$$

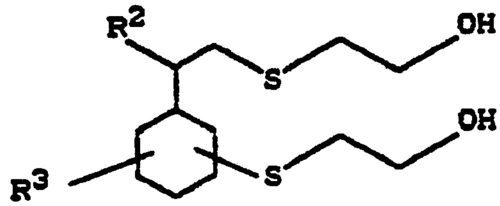

(II)

wherein R, $R^1$, $R^2$ and $R^3$ independently of one another denote hydrogen or an alkyl radical having 1 to 4

carbon atoms, a = 1, 2 or 3, b and d = 0, 1 or 2 or 3, but do not both denote 0, and e and f = 1, 2 or 3, and which have a molecular weight of 500 to 7,000.

2. Sulphur-containing aliphatic polyesters according to claim 1, in which the diol is one of the compounds

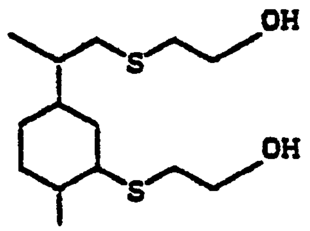

and

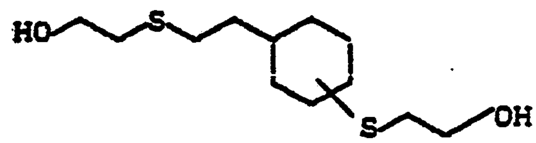

IX X

or a mixture of these.

3. Sulphur-containing aliphatic polyesters according to claim 1, in which the dicarboxylic acid (ester) is one of the compounds

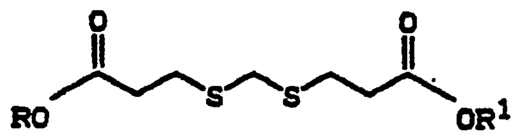

,

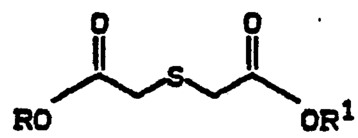

,

(III) (IV)

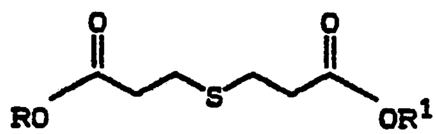

and

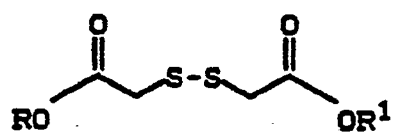

(V) (VI)

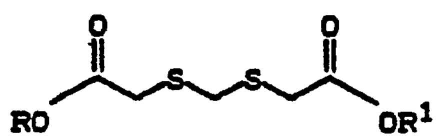

and

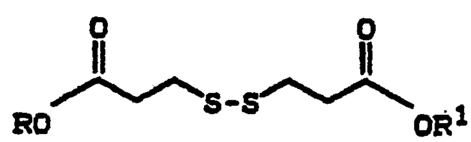

(VII) (VIII)

or mixtures thereof, wherein R and R[1] denote hydrogen or alkyl groups having 1 to 4 carbon atoms.

4. Process for the preparation of sulphur-containing aliphatic polyesters according to claim 1, characterised in that dicarboxylic acid (esters) (I) and diol (II) are mixed and polymerised up to a molecular weight of 500 to 7,000 at 50–250°C optionally in the presence of a catalyst.

5. Process according to claim 4, characterised in that diols of the formulae

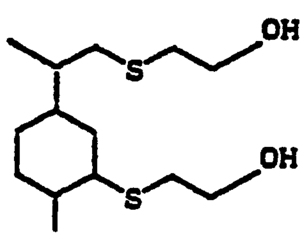

and

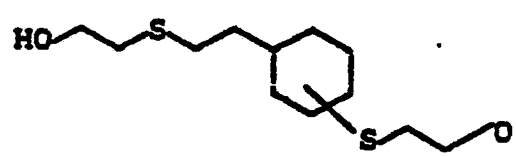

(IX) (X)

or mixtures thereof, and dicarboxylic acid (esters) of the formulae

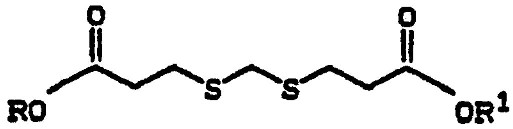,
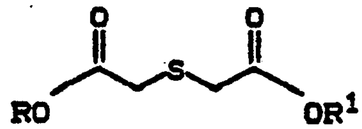,

(III) (IV)

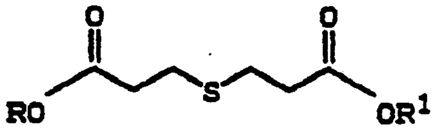,
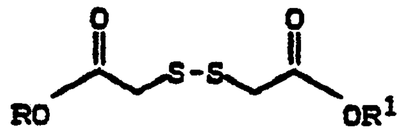

(V) (VI)

wherein R and R′ denote hydrogen or $C_1$–$C_4$-alkyl or mixtures thereof, are used.

6. Synthetic polymers, in particular thermoplastic moulding compositions, characterised by a content of 0.1 to 5 wt.% of a polyester according to claim 1.

## Revendications

1. Polyesters aliphatiques contenant du soufre, formés à partir d'acides (esters) dicarboxyliques de formule I et de diols de formule II

$$RO-\overset{O}{\overset{\|}{C}}-[(CH_2)_a-(S)_b-(CH_2)_c-(S)_d-(CH_2)_e]_f-\overset{O}{\overset{\|}{C}}-OR^1 \quad (I)$$

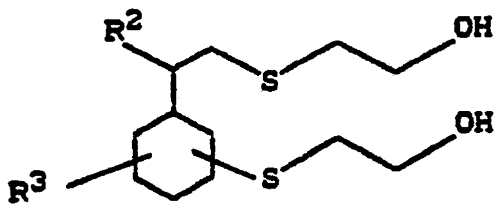

(II)

dans lesquelles R, $R^1$, $R^2$ et $R^3$ représentent chacun indépendamment les uns des autres, l'hydrogène ou un groupe alkyle en $C_1$–$C_4$, a est égal à 1, 2 ou 3, b et d sont égaux à 0, 1, 2 ou 3 mais ne peuvent être tous deux égaux à 0 et e et f sont égaux à 1, 2 ou 3, et qui ont un poids moléculaire de 500 à 7000.

2. Polyesters aliphatiques contenant du soufre, selon la revendication 1, dans lesquels le diol consiste en l'un des composés

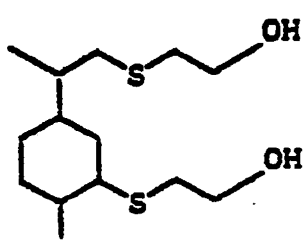

et

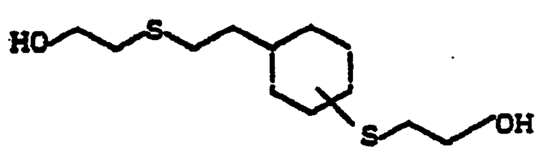

IX X

ou en un mélange de ces composés.

3. Polyesters aliphatiques contenant du soufre selon la revendication 1, dans lesquels l'acide (ester) dicarboxylique consiste en l'un des composés

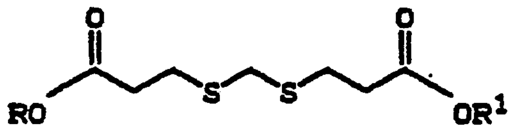
,
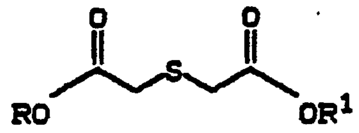
,

(III) (IV)

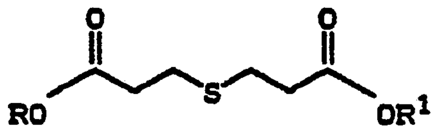
et
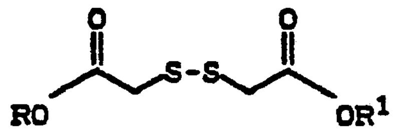

(V) (VI)

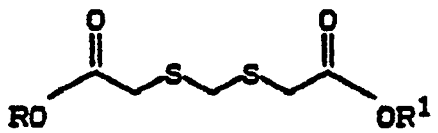
et
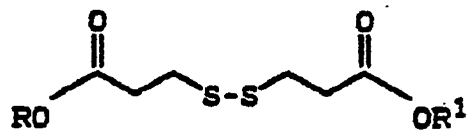

(VII) (VIII)

ou en un mélange de ces composés, R et $R^1$ représentant l'hydrogène ou des groupes alkyle en $C_1$–$C_4$.

4. Procédé de préparation des polyesters aliphatiques contenant du soufre de la revendication 1, caractérisé en ce que l'on mélange les acides (esters) dicarboxyliques I et les diols II et on soumet à polycondensation à des températures de 50 à 250°C, éventuellement en présence d'un catalyseur, jusqu'à un poids moléculaire de 500 à 7000.

5. Procédé selon la revendication 4, caractérisé en ce que l'on utilise des diols de formules

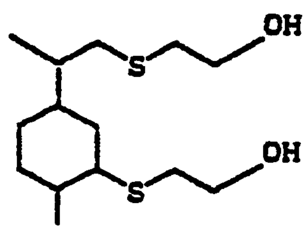
et
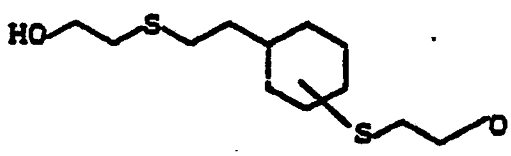

(IX) (X)

ou des mélanges de ces diols, et les acides (esters) dicarboxyliques de formules

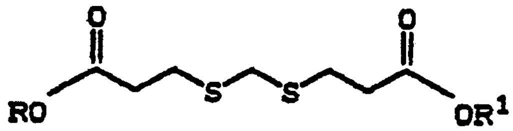,
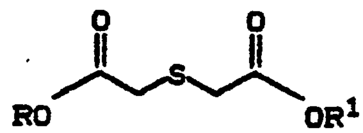,

(III) (IV)

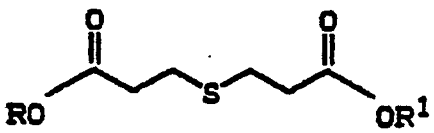,
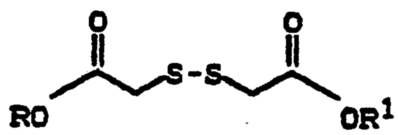

(V) (VI)

dans lesquelles R et $R^1$ représentent l'hydrogène ou des groupes alkyle en $C_1$–$C_4$, ou des mélanges de ces composants.

6. Polymères synthétiques, en particulier matières à mouler thermoplastiques, caractérisés en ce qu'ils contiennent de 0,1 à 5% en poids d'un polyester selon la revendication 1.